# EUROPÄISCHE PATENTSCHRIFT

(11) **EP 2 457 852 B1**
(45) Veröffentlichungstag und Bekanntmachung des Hinweises auf die Patenterteilung: **01.08.2018**
(21) Anmeldenummer: 11000193.0
(22) Anmeldetag: 12.01.2011
(51) Int. Cl.: B65G 1/137, B65G 47/26

(54) **Vorrichtung und Verfahren zum Kommissionieren von Artikeln**
Device and method for commissioning items
Dispositif et procédé destinés au commissionnement d'articles

(30) Priorität: 15.01.2010 AT 482010
(43) Veröffentlichungstag der Anmeldung: 30.05.2012
(73) Patentinhaber: Salomon Automation GmbH, 8114 Friesach (AT)
(72) Erfinder: Gruber, Michael, Dipl.-Ing., 8114 Friesach (AT); Bauer-Kieslinger, Franz, Dipl.-Ing., 8114 Friesach (AT)
(74) Vertreter: Witte, Weller & Partner Patentanwälte mbB

(56) Entgegenhaltungen:
- EP-A1- 0 949 169
- EP-A1- 1 862 408
- EP-A1- 2 119 643
- EP-A2- 2 275 362
- DE-A1- 2 035 740
- DE-A1- 2 062 845
- DE-A1- 19 719 651
- DE-A1-102006 025 619
- DE-U1- 29 507 991
- DE-U1- 29 724 039
- GB-A- 1 547 671
- US-A- 3 826 349
- US-A- 4 253 558
- US-A- 4 383 598
- US-A- 5 490 587
- US-A1- 2007 261 934
- US-A1- 2008 267 759
- US-B1- 6 202 821

## Beschreibung

Die Erfindung betrifft eine Vorrichtung zur Kommissionierung von Artikeln von Paletten mit einer Kommissionierfront und ein entsprechendes Verfahren zur Kommissionierung.

Es gibt zum Kommissionieren mehrere bekannte Vorrichtungen und Verfahren.

Bei der konventionellen Kommissionierung von Paletten werden die zu kommissionierende Paletten in konventionellen Regalen auf ein oder zwei Ebenen gassenweise statisch längs bereitgestellt. Der Kommissionierer geht bzw. fährt diese Paletten ab und kommissioniert entsprechend den Auftrag. Diese Vorrichtung benötigt lange Kommissionierfronten und dadurch einen hohen Platzbedarf mit langen Kommissionierwegen. Die zu kommissionierenden Paletten können ebenfalls in einem automatischen Hochregallager statisch längs bereitgestellt werden. Hier ist auch ein automatischer Nachschub bei leeren Paletten möglich. Es kann jedoch nur ein Bruchteil der möglichen Stellplätze oberhalb der Kommissionierplätze genutzt werden. Außerdem wird eine größere Anzahl an teuren Regalbediengeräten benötigt um die benötigte Gassenzahl abfahren zu können.

Eine derartige Anlage (mit einem zusätzlichen Sortierpuffer) ist in der EP 0 860 382 A1 dargestellt. Eine weitere Anlage ist in der US 6 202 821 B1 gezeigt, wobei hier Rollenbahnen vorgesehen sind um Paletten an eine Endposition zur Kommissionierung zuzuführen, an denen der Kommissionierer entlang geht. US 4 383 598 A offenbart eine Transportvorrichtung von Artikeln auf Paletten, die sich auf Rollenbahnen befinden, wobei die Rollenbahnen ein Gefälle von 1° bis 6° aufweisen, wobei jede der Rollenbahnen aus 2 bis 10 Rüstplätzen besteht, wobei jeder der Rüstplätze zur Bereitstellung jeweils einer der Paletten dient, und wobei jeder der Rüstplätze auf seiner Ablaufseite einen Separator aufweist, auf den eine der Paletten aufläuft, wenn sich der jeweilige Separator in seiner Verriegelungsposition befindet. Die Erfindung hat sich zum Ziel gesetzt, eine Anordnung zu schaffen, bei der bei zumindest gleicher Kommissionierfeistung geringere Wege für den Kommissionierer zurückzulegen sind, wodurch das gesamte System wirtschaftlicher wird.

Die Erfindung ist daher dadurch gekennzeichnet, dass die Kommissionierfront aus mehreren Rollenbahnen besteht, die senkrecht an ein Zulieferregal anschließen, wobei zwischen den senkrechten Rollenbahnen Kommissioniergassen vorgesehen sind. Durch diese Anordnung muss der Kommissionierer nunmehr nicht an allen Paletten vorbeigehen bzw. -fahren, um die nötigen Artikel für einen Auftrag zusammenzustellen, sondern er kann auch gegebenenfalls ganze zwischen den senkrechten Rollenbahnen vorhandene Kommissioniergassen auslassen, wenn keine Artikel daraus gebraucht werden.

Im Allgemeinen wird er jedoch für einen Auftrag nur einen Teil der Kommissioniergasse(n) entlanggehen müssen. Dadurch verkürzt sich der Weg für den Kommissionierer erheblich. Weiters ergibt sich dadurch ein seitlicher Zugang zu den Paletten, was die Eingriffstiefe auf ca. 0,8 m statt bisher ca. 1,2m bei längsseitigem Zugang verkürzt. Dadurch, dass die Rollenbahnen senkrecht an das Zulieferregal anschließen kann von beiden Seiten her in gleicher Weise kommissioniert werden. Ferner weisen die Rollenbahnen Rüstplätze für 2 bis 10 Paletten, vorzugsweise für 3 bis 5, beispielsweise für 4 Paletten, auf. Dadurch ergibt sich eine optimale Weglänge des Kommissionierers für die einzelnen Aufträge. Erfindungsgemäß sind die Paletten jeweils durch Separatoren voneinander getrennt. Dadurch kann ein sofortiges Nachlaufen der Paletten und damit ein Einklemmen der Paletten verhindert werden und es können leere Paletten auch mitten aus der Rollenbahn entnommen werden. In Folge der Entnahme rollen die hintereinanderstehenden Paletten jeweils um einen Platz nach vorne und es kann an die letzte Palette anschließend eine neue volle Palette aus dem Regal zugeführt werden. Erfindungsgemäß weisen die Rollenbahnen ein Gefälle von 1° bis 6°, vorzugsweise ca. 2° auf, das größer ist, als üblich. In Kombination mit Bremsrollen wird sichergestellt, dass sowohl schwere (volle) als auch leichte (leere) Paletten sicher um jeweils einen Platz nach vorne rollen können.

Werden alle Rüstplätze mit einer separaten mechanischen Entsperrvorrichtung versehen, so kann eine leere Palette, die sich zwischen zwei weiteren Paletten befindet, einfach und ohne Gefahr eines Nachrollens entfernt werden, da erst nach Betätigung der Entsperrvorrichtung die Palette nachrollen kann.

Wird im Regal mindestens ein weiterer Rüstplatz vorgesehen, der an der Stirnseite des Ganges zwischen zwei Rollenbahnen angeordnet ist, so kann dieser besonders gut für die Zuführung von zusätzlichen Artikeln genutzt werden.

Die Erfindung wird nun anhand der Zeichnungen beispielhaft beschrieben, wobei
Fig. 1 eine 3D-Ansicht einer erfindungsgemäßen Anlage,
Fig. 2a einen Grundriss einer erfindungsgemäßen Rollenbahn,
Fig. 2b eine Seitenansicht einer erfindungsgemäßen Rollenbahn,
Fig. 3 eine Schrägansicht einer erfindungsgemäßen Rollenbahn,
Fig. 4 eine vollständig beladene Rollenbahn und
Fig. 5 eine Rollenbahn mit entfernter Palette darstellt.

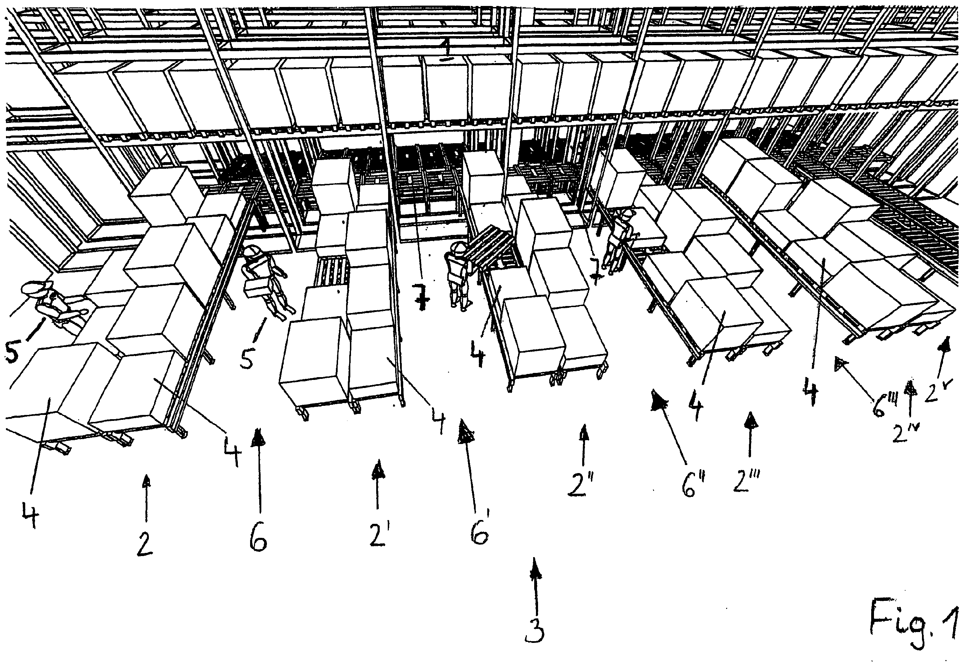

Fig. 1 zeigt ein Regallager, bei dem an ein Zulieferregal 1 eine Anzahl von senkrecht anschließenden Rollenbahnen 2, 2', 2", 2"',2'^{v},2^{v} als Teil einer Kommissionierfront 3 vorgesehen sind. Die Rollenbahnen 2, 2', 2", 2"', 2'^{v}, 2^{v} sind dabei in unterschiedlichen Zuständen dargestellt. Auf den Rollenbahnen finden sich eine Anzahl von Paletten 4 mit unterschiedlichen Artikeln. Es sind hier die unterschiedlichen Zustände der Beladung der einzelnen Rollenbahnen dargestellt. Der Kommissionierer 5 entnimmt z.B. bei Rollenbahn 2 die erforderlichen Artikel für einen Auftrag und geht dann zu Rollenbahn 2' weiter.

Wenn dort Artikel für seinen Auftrag gelagert sind geht er in die Kommissioniergasse 6 und holt die entsprechenden Artikel. Im gezeigten Beispiel sind jeweils fünf Paletten pro Rollenbahn dargestellt. Bei Rollenbahn 2' ist dargestellt, dass der Kommissionierer 5 den letzten Artikel von einer Palette 4 entnimmt. Bei Rollenbahn 2" ist in weiterer Folge dargestellt, dass der Kommissionierer 5 die leere Palette 4 von der Rollenbahn 2" entfernt. Durch den später beschriebenen Mechanismus bleiben die übrigen Paletten 4 an ihrer Position stehen. Danach betätigt der Kommissionierer 5 einen vorgesehenen Hebel, wodurch die vollen Paletten 4 nachrollen. An das Ende kommt dann aus dem zulieferregal 1 eine neue, volle Palette mit den vorher verteilten Artikeln.

Obwohl auf einer Rollenbahn 2 immer nur die gleichen Artikel vorrätig gehalten werden, befinden sich diese je nach kommissionierten Mengen immer an unterschiedlichen Stellen, d.h. die Artikel rollieren. Grundsätzlich können an die Stirnseite der Gänge 6 im Zulieferregal 1 an den Positionen 7 noch zusätzliche Paletten zur Kommissionierung bereitgestellt werden. Dadurch, dass der Kommissionierer 5 jeweils nur bis zum von der Außenseite entferntesten Artikel gehen muss und auch ganze Kommissioniergasse überspringen kann, reduziert sich der Weg während der Kommissionierung eines Auftrags um einen wesentlichen Teil.

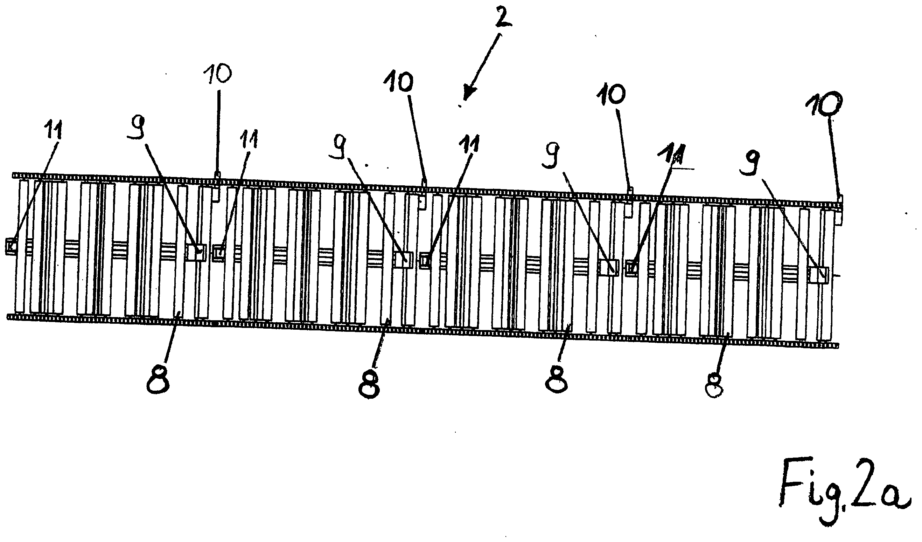

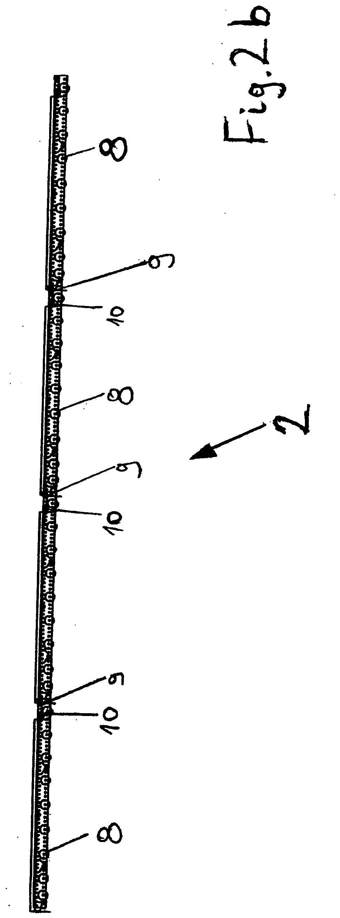

Fig. 2 a zeigt den Grundriss einer erfindungsgemäßen Rollenbahn 2. Man sieht hier die einzelnen Rollen 8. Diese Rollenbahn 2 ist für die Aufnahme von vier Paletten vorgesehen. An der Ablaufseite jeder Position befindet sich ein Riegel (Separator) 9, durch den die Palette in ihrer Position gehalten wird. Durch eine geeignete Wahl der Rollen 8, kann die Palette abgebremst werden, so dass sie sehr langsam auf diesen Riegel 9 aufläuft. Ist eine Palette entleert, wird vom Kommissionierer die leere Palette entfernt und eine Entsperreinrichtung 10 betätigt, wodurch die nächste Palette nachrückt. Wenn diese Palette den Mechanismus 11 passiert, wird dadurch der Riegel 9 wieder in die Verriegelungsposition gebracht, so dass die Palette dort auf Riegel 9 aufläuft.

Fig. 2b zeigt nun die erfindungsgemäße Rollenbahn 2 in Seitenansicht. Hier sind die einzelnen Rollen 8 sowie die Riegel 9 und Entriegelungsvorrichtungen 10 erkennbar.

In Fig. 3 ist die erfindungsgemäße Rollenbahn 2 in 3D Ansicht dargestellt. Man erkennt hier gut die Rollen 8 sowie die Riegel 9 mit Entriegelungsvorrichtungen 10 sowie Mechanismen 11, die die Riegel 9 wieder in Verriegelungsposition bringen.

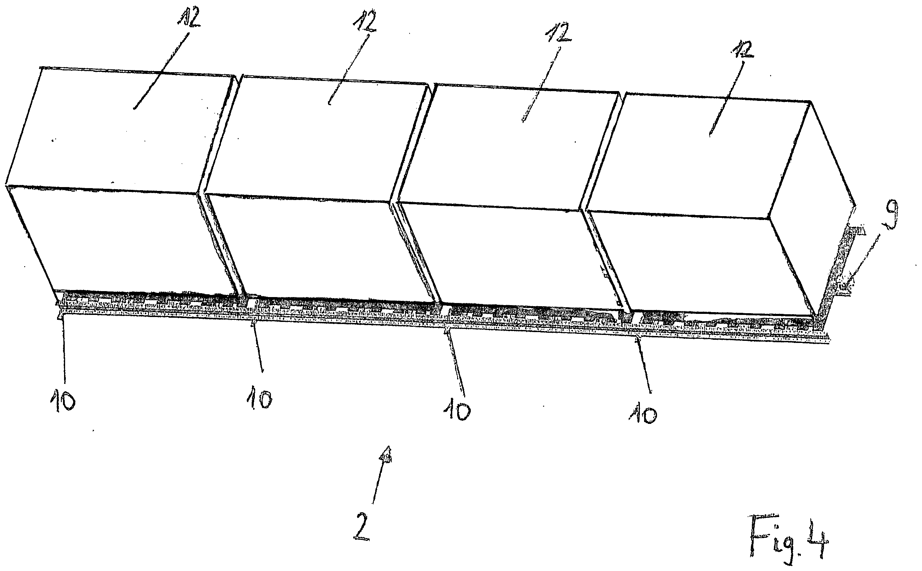

Fig. 4 zeigt die erfindungsgemäße Rollenbahn 2 mit vier vollen Paletten 12. Hier ist eine Variante mit Platz für vier Paletten 12 auf der Rollenbahn 2 dargestellt, es können jedoch je nach zu kommissionierenden Artikeln auch bis zu zehn Paletten 12 pro Rollenbahn 2 vorgesehen sein.

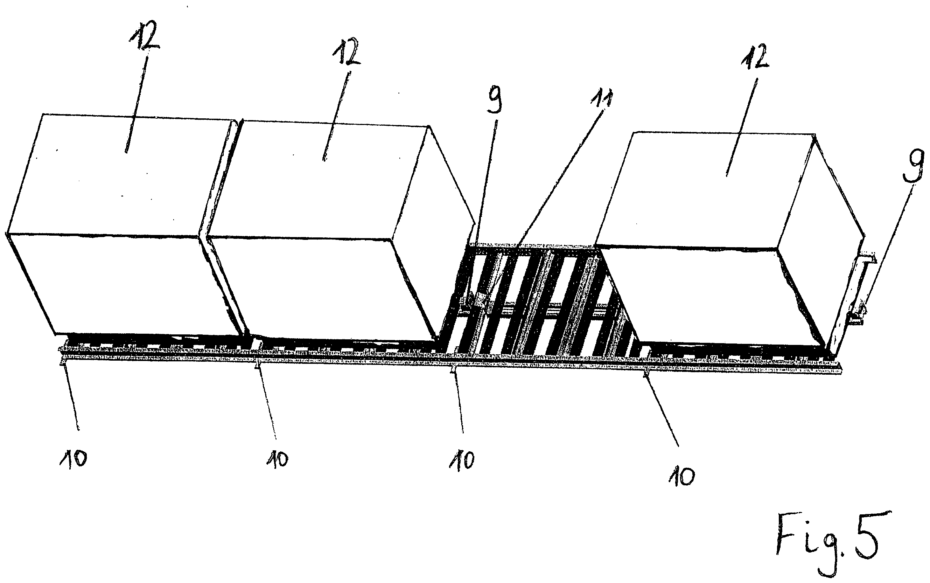

Fig. 5 zeigt nun die Rollenbahn 2, bei der eine Palette 12 geleert und entnommen wurde. Die übrigen Paletten 12 werden durch die Riegel 9 in ihren Positionen gehalten. Wird nun die Entriegelungsvorrichtung 10 betätigt, so rollt die entsprechende Palette 12 bedingt durch die Neigung der Rollenbahn 2 von 1° bis 6°, vorzugsweise ca.2° über den Mechanismus 11, der den Riegel 9 wieder in Verriegelungsposition bewegt, wodurch die Palette 12 dort wieder fixiert wird. Aus dem Lager wird dann wiederum eine neue Palette 12 mit den Artikeln der geleerten und entfernten Palette nachgeliefert, so dass die Rollenbahn 2 wiederum voll belegt ist.

## Patentansprüche

1. Vorrichtung zur manuellen Kommissionierung von Artikeln von Paletten, indem ein Kommissionierer (5) die Artikel für einen Auftrag von einer der Paletten (4) entnimmt, die sich auf Rollenbahnen befinden, mit einem Zulieferregal (1) zur Nachlieferung von neuen vollen Paletten und mit einer Kommissionierfront (3),
wobei die Kommissionierfront (3) aus mehreren der Rollenbahnen (2, 2', 2", 2"', 2^{IV}, 2^{V}) besteht, die an dem Zulieferregal (1) angeordnet sind,
wobei die Rollenbahnen (2, 2', 2", 2"', 2^{IV} , 2^{V}) senkrecht unmittelbar an das Zulieferregal (1) anschließen,
wobei die Rollenbahnen (2) ein Gefälle von 1° bis 6° aufweisen,
wobei zwischen den senkrechten Rollenbahnen Kommissioniergassen (6) vorgesehen sind,
wobei jede der Rollenbahnen (2) aus 2 bis 10 Rüstplätzen besteht,
wobei jeder der Rüstplätze zur Bereitstellung jeweils einer der Paletten (12) dient, von denen der Kommissionierer (5) die entsprechenden Artikel holt, zu welchem Zweck der Kommissionierer (5) in die Kommissioniergassen (6) hineingeht, und
wobei jeder der Rüstplätze auf seiner Ablaufseite einen Separator (9) aufweist, auf den eine der Paletten (12) aufläuft, wenn sich der jeweilige Separator (9) in seiner Verriegelungsposition befindet.

2. Vorrichtung nach Anspruch 1, **dadurch gekennzeichnet, dass** alle Rüstplätze eine separate mechanische Entsperrvorrichtung (10) aufweisen.

3. Vorrichtung nach einem der Ansprüche 1 bis 2, **dadurch gekennzeichnet, dass** jedem Separator (9) ein Verriegelungsmechanismus (11) zugeordnet ist.

4. Vorrichtung nach einem der Ansprüche 1 bis 3, **dadurch gekennzeichnet, dass** mindestens ein weiterer Rüstplatz (7) vorgesehen ist, der innerhalb des Zulieferregals an der Stirnseite des Ganges (6) zwischen zwei Rollenbahnen (2, 2', 2", 2"', 2^{IV}, 2^{V}) angeordnet ist.

5. Verfahren zur manuellen Kommissionierung von Artikeln von Paletten herunter,
wobei die Paletten in einer Vorrichtung gemäß einem der Ansprüche 1 bis 4 bereitgestellt werden,
wobei ein Kommissionierer (5) die Artikel für einen Auftrag von einer der Paletten (4) holt, die sich auf den Rollenbahnen befinden, zu welchem Zweck der Kommissionierer in die Kommissioniergassen (6) hineingeht,
wobei neue volle Paletten durch das Zulieferregal (1) nachgeliefert werden,
wobei jeder der Rüstplätze zur Bereitstellung jeweils einer der Paletten (12) genutzt wird, und
wobei der Kommissionierer (5) in mehreren der Kommissioniergassen (6) kommissioniert, und wobei auf jeder der Rollenbahnen (2) auf mehrereunterschiedliche Artikel zugegriffen wird.

6. Verfahren nach Anspruch 5, **dadurch gekennzeichnet, dass** eine durch eine Kommissionierung geleerte Palette (12) von der entsprechenden Rollenbahn (2) entfernt und eine dem entsprechenden Rüstplatz zugeordnete mechanische Entsperrvorrichtung (10) betätigt wird, so dass eine entsprechende stromaufwärtige Palette (12) weiterrollen kann.

## Claims

1. A device for manually picking articles from pallets, wherein a picking person (5) removes the articles for an order from one of the pallets (4) located on a roller track, wherein the device comprises a supplying rack (1) for replenishing new full pallets, and a picking front (3),
wherein the picking front (3) is formed of a plurality of the roller tracks (2, 2', 2", 2"', 2^{IV}, 2^{V}) arranged adjacent to the supplying rack (1),
wherein the roller tracks (2, 2', 2", 2"', 2^{IV}, 2^{V}) are perpendicularly connected directly to the supplying rack (1),
wherein the roller tracks (2) comprise a slope of 1° to 6°,
wherein picking aisles (6) are provided between the perpendicular roller tracks,
wherein each of the roller tracks (2) is formed of 2 to 10 preparation locations,
wherein each of the preparation locations serves for providing respectively one of the pallets (12) from which the picking person (5) retrieves the corresponding articles, for which purpose the picking person (5) walks into the picking aisles (6), and
wherein each of the preparation locations comprises a separating device (9) at a draining side thereof, on which separating device one of the pallets (12) abuts if the respective separating device (9) is in its locking position.

2. The device of claim 1, **characterized in that** each of the preparation locations comprises a separate mechanical unlocking device (10).

3. The device of one of claims 1 to 2, **characterized in that** each separating device (9) has assigned one locking mechanism (11).

4. The device of any of of claims 1 to 3, **characterized in that** at least one further preparation location (7) is provided, which is arranged within the supplying rack at a front side of the aisle (6) between two roller tracks (2, 2', 2", 2"', 2^{IV}, 2^{V}).

5. A method for manually picking articles from pallets,
wherein the pallets are provided in a device according to one of claims 1 to 4,
wherein a picking person (5) retrieves the articles for an order from one of the pallets (4) located on the roller tracks, for which purpose the picking person walks into the picking aisles (6),
wherein new full pallets are replenished through the supplying rack (1),
wherein each of the preparation locations is used for providing respectively one of the pallets (12), and
wherein the picking person (5) is picking at a plurality of the picking aisles (6), and wherein on each of the roller tracks (2) several different articles are accessed.

6. The method of claim 5, **characterized in that** a pallet (12), which has been emptied due to picking, is removed from the corresponding roller track (2), and a unlocking device (10), which is assigned to the corresponding preparation location, is operated so that a corresponding pallet (12) arranged upstream can roll further.

## Revendications

1. Dispositif destiné au commissionnement d'articles de palettes, dans lequel un chariot de préparation des commandes (5) enlève de l'une des palettes (4) les articles pour une commande, les palettes se trouvant sur des trains de rouleaux, comprenant un rayonnage de livraison (1) pour la livraison ultérieure de nouvelles palettes pleines, comprenant un front de commissionnement (3),
le front de commissionnement (3) se composant d'une pluralité des trains de rouleaux (2, 2', 2", 2"', 2^{iv}, 2^{v}) qui sont disposés sur le rayonnage de livraison (1),
les trains de rouleaux (2, 2', 2", 2"', 2^{iv}, 2^{v}) se raccordant verticalement directement au rayonnage de livraison (1),
les trains de rouleaux (2) présentant un gradient de 1° à 6°,
des voies de commissionnement (6) étant prévues entre les trains de rouleaux verticaux,
chacun des trains de rouleaux (2) se composant de 2 à 10 espaces de préparation,
chacun des espaces de préparation servant à fournir à chaque fois l'une des palettes (12), depuis lesquelles le chariot de préparation de commandes (5) apporte les articles correspondants, à quelles fins le chariot de préparation des commandes (5) entre dans les voies de commissionnement (6), et
chacun des espaces de préparation présentant, sur son côté de sortie, un séparateur (9) sur lequel sort l'une des palettes (12) lorsque le séparateur respectif (9) se trouve dans sa position de verrouillage.

2. Dispositif selon la revendication 1, **caractérisé en ce que** tous les espaces de préparation présentent un dispositif de déverrouillage mécanique séparé (10).

3. Dispositif selon l'une quelconque des revendications 1 à 2, **caractérisé en ce qu'**un mécanisme de verrouillage (11) est associé à chaque séparateur (9).

4. Dispositif selon l'une quelconque des revendications 1 à 3, **caractérisé en ce qu'**au moins un espace de préparation supplémentaire (7) est prévu, lequel est disposé à l'intérieur du rayonnage de livraison au niveau du côté frontal de la voie (6) entre deux trains de rouleaux (2, 2', 2", 2"', 2^{iv}, 2^{v}).

5. Procédé destiné au commissionnement manuel d'articles de palettes vers le bas, les palettes étant fournies dans un dispositif selon l'une quelconque des revendications 1 à 4,
un chariot de préparation des commandes (5) apportant les articles pour une commande depuis l'une des palettes (4), lesquelles palettes se trouvent sur les trains de rouleaux, à quelles fins le chariot de préparation de commandes pénètre dans les voies de commissionnement (6),
de nouvelles palettes pleines étant livrées ultérieurement par le rayonnage de livraison (1),
chacun des espaces de préparation étant utilisé pour fournir à chaque fois l'une des palettes (12), et
le chariot de préparation des commandes (5) préparant les commandes dans plusieurs des voies de commissionnement (6), et sur chacun des trains de rouleaux (2) plusieurs articles différents étant saisis.

6. Procédé selon la revendication 5, **caractérisé en ce qu'**une palette (12) vidée par une opération de commissionnement est enlevée du train de rouleaux correspondant (2) et un dispositif de déverrouillage mécanique (10) associé à l'espace de préparation correspondant est actionné de telle sorte qu'une palette amont correspondante (12) puisse avancer davantage sur les rouleaux.
